# EUROPÄISCHE PATENTANMELDUNG

(11) **EP 4 830 893 A2**
(43) Veröffentlichungstag der Anmeldung: **28.10.2026**
(21) Anmeldenummer: 25221636.1
(22) Anmeldetag: 09.12.2025
(51) Int. Cl.: B29B 17/02, B29B 17/04, B29L 31/00

(54) **ANLAGE UND VERFAHREN ZUR WIEDERAUFBEREITUNG VON BEHÄLTERN UND/ODER VERPACKUNGSBESTANDTEILEN AUS KUNSTSTOFF**

(30) Priorität: 24.04.2025 DE 102025115767
(71) Anmelder: Krones Recycling GmbH, 24941 Flensburg (DE)
(72) Erfinder: Raego, Vassil, 24941 Flensburg (DE)
(74) Vertreter: Grünecker Patent- und Rechtsanwälte PartG mbB

(57) **Zusammenfassung**

Beschrieben werden eine Anlage und ein Verfahren zur Wiederaufbereitung von Behältern und/oder Verpackungsbestandteilen jeweils aus Kunststoff. Die Anlage umfasst wenigstens eine Schneidmühle zur Nasszerkleinerung der Behälter zu Flakes und einen daran hinsichtlich der Aufbereitung anschließenden Wäscher zur Nassreinigung der Flakes. Der Wäscher umfasst wenigstens einen Trog zur Aufnahme der Flakes, wenigstens ein Fördermittel zur Durchmischung der Flakes und zu ihrem Transport durch den Trog und über dem Fördermittel angeordnete Abgabevorrichtungen zum Abgeben einer Waschflüssigkeit auf die Flakes während ihrer Durchmischung. Dies ermöglicht eine besonders schonende Wäsche und ermöglicht dadurch eine effiziente Wiederaufbereitung von Behältern und Verpackungsbestandteilen, auch von solchen mit vergleichsweise dünnen und brüchigen Wänden.

## Beschreibung

Die Erfindung betrifft eine Anlage und ein Verfahren zur Wiederaufbereitung von Behältern und/ oder Verpackungsbestandteilen aus Kunststoff.

Bekanntermaßen können Behälter und/oder Verpackungsbestandteile aus Kunststoff nach ihrem Gebrauch, beispielsweise für die Abfüllung und den Verkauf von Getränken oder dergleichen Lebensmitteln durch Zerkleinern und Waschen für eine Wiederverwendung des Kunststoffs aufbereitet werden. Hierfür eingesetzte Anlagen umfassen entsprechend wenigstens ein Zerkleinerungsmodul mit einer Nassmühle und einem Friktionswäscher und ein nachgeschaltetes Waschmodul zur Vor- und Hauptwäsche des zerkleinerten Kunststoffs.

Die Nassmühle zerkleinert das Material zu sogenannten Flakes geeigneter Größe beispielsweise entsprechend einer vorgegebenen Sieblochung. Das in der Nassmühle eingesetzte Wasser löst Verunreinigungen an und zirkuliert im Prozess durch Partikelsiebe und wird ggf. durch Flotation und/oder Dekantierung aufbereitet. Der üblicherweise direkt anschließende Friktionswäscher dient der Abscheidung von Feinteilen und Schmutz von den Flakes im Wesentlichen durch Schleudern und ermöglicht deren Vortrocknung. Hierbei bewegen rotierende Paddel das Material relativ schnell näherungsweise radial gegen einen Siebkorb. Die Flakes prallen dabei hin und her, sodass Wasser und Feinteile durch den Siebkorb entweichen können.

Anschließend werden die Flakes zugunsten eines gleichmäßigen Massenflusses stromabwärts in der Regel zwischengespeichert. Dies ist nass möglich, für eine Zwischenspeicherung in Silos und/oder für eine Etikettenentfernung können aber auch zusätzliche Trocknungsschritte und ein Zickzack-Abscheider verwendet werden.

Das Waschmodul umfasst eingangsseitig einen Vorwäscher zur mechanischen Reinigung der Flakes, indem relativ grober Schmutz im kontinuierlichen Wasserkreislauf aufgeweicht und abgewaschen wird. Die Flakes werden dabei vorgewärmt und durch eine horizontale Welle mit Pflugschar- und Tellerwerkzeugen durchmischt und über ein Wehr zum Auslauf gefördert. Die relativ langsame Rotation der Welle in Kombination mit axialer Förderbewegung erzeugt Reibung, die Etiketten, Klebstoff und weitere Kontaminanten löst. Der Vorwäscher kann mehrstufig ausgebildet sein, um die Waschqualität der Flakes durch getrennte Kreisläufe für unterschiedlich schmutziges Waschwasser zu optimieren.

Anschließend können schwimmende und sinkende Fraktionen voneinander getrennt werden.

Das Waschmodul umfasst ferner stets eine Heißwaschstufe zur Intensivwäsche, um Verunreinigungen wie Klebstoffe, Schmutz, Fett, Proteine und dergleichen chemisch zu entfernen, in der Regel durch Verwendung verdünnter Natronlauge mit Reinigungsmittel und Entschäumer. Das Waschmodul dient in der Regel ferner zur anschließenden Spülung sowie zum Klassieren der Flakes mittels Schwimm-Sink-Verfahren, zu ihrer Trocknung in Rotations- und Konvektionstrocknern und zur abschließenden Klassierung des gewaschenen und getrockneten Materials in einem Zickzack-Abscheider, wobei leichte Anteile wie Etiketten, Staub oder Folien von den schwereren Flakes entfernt werden.

Nachteilig bei Anlagen mit der obigen Prozessaufteilung in Nassmahlmodul und Waschmodul ist zum einen die große Anzahl nötiger Prozesseinheiten zur Materialtrennung, -wäsche und -trocknung sowie zugehöriger Wasserkreisläufe, zum anderen aber auch die relativ geringe Materialausbeute oder gar fehlende Eignung für dünnwandige und/oder brüchige Behälter und Verpackungsbestandteile, da diese zu stark zerkleinert werden und schließlich als Materialverlust zu Buche schlagen.

Es besteht daher demgegenüber Verbesserungsbedarf.

Die gestellte Aufgabe wird mit dem Gegenstand der unabhängigen Ansprüche gelöst. Vorteilhafte Ausführungsformen sind u.a. in den abhängigen Ansprüchen angegeben.

Die beschriebene Anlage dient zur Wiederaufbereitung von Ausgangsmaterial in Form gebrauchter Behälter und/oder Verpackungsbestandteile, deren Wandaufbau jeweils im Wesentlichen aus Kunststoff besteht, z.B. zu wenigstens 90%. Die Wiederaufbereitung besteht hier aus einer Zerkleinerung der Behälter bzw. Verpackungsbestandteile und einer anschließenden Reinigung des zerkleinerten Materials.

Die Anlage umfasst zu diesem Zweck wenigstens eine Schneidmühle zur Nasszerkleinerung der Behälter / Verpackungsbestandteile zu Flakes und einen daran hinsichtlich der Aufbereitung anschließenden Wäscher zur Nassreinigung der Flakes. Der Wäscher umfasst wenigstens einen Trog zur Aufnahme der Flakes, wenigstens ein Fördermittel zur Durchmischung der Flakes und zu ihrem Transport durch den Trog und über dem Fördermittel angeordnete Abgabevorrichtungen zum Abgeben einer Waschflüssigkeit auf die Flakes während ihrer Durchmischung.

Es hat sich überraschenderweise herausgestellt, dass aus der Nasszerkleinerung und/oder der Verschmutzung des Ausgangsmaterials resultierende Kontamination, wie beispielsweise Fremdstoff-Partikel und lösliche Bestandteile, durch eine gleichzeitige Durchmischung der Flakes und deren Beaufschlagung mit Wasser währenddessen besonders materialschonend und dennoch ausreichend effektiv von den Flakes entfernt werden können.

Somit können Behälter und Verpackungsbestandteile mit besonders dünnen und brüchigen Wandabschnitten zu Flakes gemahlen und so gewaschen werden, dass die Flakes dabei nicht übermäßig zerkleinert werden und demzufolge bei nachfolgenden Wasch- und Trennprozessen als Materialverlust zu Buche schlagen und somit die Effizienz des Wiederaufbereitungsverfahrens insgesamt in unerwünschter Weise reduzieren.

Die Behälter sind oder umfassen beispielsweise Getränkeflaschen mit einer Wanddicke von 200 µm bis 3 mm und die Verpackungsbestandteile Schalen mit einer Wanddicke von 100 bis 500 µm, insbesondere jeweils solche aus PET.

Bei den Behältern kann es sich auch um Becher, beispielsweise zur Aufnahme von Milchprodukten, oder andere Nahrungsmittelbehälter handeln. Mögliche Behältermaterialien sind ferner PS, PP, PE und weitere Kunststoffe. Zugehörige Wandstärken liegen dann beispielsweise im Bereich von 200 µm bis 1 mm.

Unter einem hinsichtlich der Aufbereitung an die Nasszerkleinerung anschließenden Wäscher (bzw. einer solchen Prozessführung) ist gemeint, dass die Flakes dazwischen keine weiteren Prozesseinheiten zur ihrer Reinigung und insbesondere ihrer Wäsche, wie beispielsweise einen Friktionswäscher, durchlaufen. Somit ist neben einer verbesserten Materialausbeute auch ein geringerer apparativer Aufwand möglich.

Der beschriebene Wäscher und die Schneidmühle können daher als Anlagenmodul mit gemeinsamer Medienversorgung und/oder Steuerung ausgebildet sein, beispielsweise indem die Schneidmühle automatisch mit Abwasser des Wäschers versorgt wird. Anders gesagt kann der Wäscher bzw. eine Vorwäsche der Flakes in ein Nassmahlmodul integriert werden. Demzufolge ist eine Vorwäsche in einem stromabwärts folgenden Waschmodul zur Heiß-/ Intensivwäsche entbehrlich. Dadurch lassen sich Installationskosten und Betriebskosten der Anlage gegenüber einer bisher üblichen Prozessverteilung auf Nassmahlmodul und Waschmodul reduzieren.

Bei der Schneidmühle kann es sich um eine Prozesseinheit prinzipiell bekannter Bauart handeln, beispielsweise wie eingangs beschrieben ist, sodass hierauf nicht weiter im Detail eingegangen wird. Vorteilhafterweise kann die beschriebene Anlage zwei parallel geschaltete Schneidmühlen umfassen, an die der Wäscher im obigen Sinne prozesstechnisch direkt anschließt.

Vorteilhaft ist, wenn der Wäscher wenigstens zwei hintereinander geschaltete Waschstufen mit Umwälzkreisen für die in der jeweiligen Waschstufe verwendete Waschflüssigkeit umfasst. Die Umwälzkreise sind vorzugsweise mittels Kaskadierungsleitungen so verbunden, dass sich die Waschstufen gegenseitig entgegen des Materialstroms der Flakes mit der Waschflüssigkeit versorgen können. Die Waschstufen sind dann bezüglich des Waschflüssigkeitsstroms entgegengesetzt zum Strom der Flakes kaskadiert. Das heißt, die erste Kaskadenstufe davon befindet sich im Bereich der letzten Waschstufe, die letzte Kaskadenstufe im Bereich der ersten Waschstufe.

Im Bereich der letzten Waschstufe kann dem Wäscher außerhalb der beschriebenen Anlage anfallendes oder aufbereitetes Prozesswasser und/oder Frischwasser zugeführt werden, sodass dort die, bezogen auf den Wäscher insgesamt, beste Wasserqualität vorliegt und die Flakes unmittelbar vor ihrer Abgabe aus dem Wäscher mit entsprechend sauberem Wasser in der ersten Kaskadenstufe abgeduscht werden können. Hierfür wird beispielsweise 0,5 bis 2 I/kg Flüssigkeitsauffrischung über die erste Kaskadenstufe in den Wäscher abgegeben. Dadurch können zudem Verunreinigungen mit einer entgegen des Materialstroms der Flakes zunehmenden Schmutzfracht mittels der Waschflüssigkeit besonders effektiv abtransportiert werden.

Bei der Waschflüssigkeit handelt es sich im Wesentlichen um Wasser, in dem beispielsweise infolge Flüssigkeitsverschleppung aus einer nachgeschalteten Heißwäsche niedrig konzentrierte Lauge und beigemengte Additive enthalten sein können, beispielsweise Reinigungsmittel und Entschäumer. Die Waschflüssigkeit kann entsprechend zumindest anteilig aus einem Waschmodul bzw. einer Heißwäsche der Flakes stammendes Prozesswasser sein und eine Temperatur von beispielsweise 30° bis 50° Celsius aufweisen. Das Prozesswasser kann beispielsweise von einem Nachwäscher über wenigstens einen ggf. in Reihe geschalteten Dichtetrenner in den beschriebenen Wäscher fließen und von dort aus den Wasserkreislauf der wenigstens einen Schneidmühle auffrischen.

Der Durchsatz der Waschflüssigkeit in einzelnen Waschstufen kann beispielsweise 50 bis 150 m³/h und/oder 10 bis 50 l / kg Flakes betragen. Diese Werte eignen sich beispielsweise für einen Materialdurchsatz der Flakes von 2000 bis 4000 kg/h (beispielsweise bei einer angenommenen Schüttdichte von 250 kg/m³ +- 20%).

Die beschriebene Anlage und das beschriebene Verfahren eignen sich zur Aufbereitung verschiedener in der Lebensmitteltechnologie gängiger Kunststoffe, wie beispielsweise PET, PP, PE und/oder PS.

Eine besonders schonende Wäsche der Flakes wird ermöglicht, wenn das Transportmittel als liegend und insbesondere horizontal ausgerichtete Welle mit daran rotierenden Fördermitteln ausgebildet ist und die Welle im Arbeitsbetrieb mit einer vergleichsweise geringen Drehzahl von 5 bis 30 Umdrehungen pro Minute rotiert. Beispielsweise resultiert bei einer Drehzahl von 17 Umdrehungen pro Minute und einem Radius des zugeordneten Trogs von 400 mm eine maximale Umfangsgeschwindigkeit von 0,7 m/s an der Wand des Trogs, was nur relativ sanfte Reibung der Flakes untereinander verursacht, sodass dabei auch relativ dünnwandige und brüchige Flakes nicht zusätzlich zerkleinert werden. Der Radius des Trogs kann beispielsweise 200 bis 800 mm betragen.

Vorzugsweise umfasst die Anlage eine Versorgungsleitung zur Versorgung der wenigstens einen Schneidmühle mit im Wäscher aufgefangener Waschflüssigkeit. Die Versorgungsleitung kann optional von einem Vorlagetank abzweigen, der in einen Umwälzkreis der eingangsseitigen Waschstufe integriert ist und über wenigstens eine Aufbereitungsstufe zur Fest-Flüssig-Trennung, insbesondere einen Hydrozyklon und/oder eine Siebmaschine, mit der Waschflüssigkeit gespeist wird. Beispielsweise kann hierfür eine Leitung in den Auffangbehälter bzw. Tank der ersten Waschstufe im Sinne eines mechanischen Überlaufs zurückführen, um eine geeignete Wasserqualität in der ersten Waschstufe einzustellen.

Die beschriebene Kombination aus Schneidmühle(n) und nachgeschaltetem Wäscher kann als Nassmahlmodul mit integrierter Vorwäsche verstanden werden. Daran kann sich eine Zwischenspeicherung der Flakes anschließen, welche sowohl nass möglich ist als auch trocken in einem Silo (infolge eines zusätzlichen Trocknungsschritts). Es kann sich ferner ein Waschmodul zur Heiß-/Intensivwäsche der Flakes anschließen, welches dann ohne (zusätzliche) Vorwäsche der Flakes auskommt. Die beschriebene Anlage umfasst dann insgesamt wenigstens eine Schneidmühle, einen direkt anschließenden Wäscher und das nachgeschaltete Waschmodul.

Das so anschließende Waschmodul umfasst vorzugsweise: eine Heißwaschstufe zur Intensivwäsche, um Klebstoffe, Schmutz, Fett, Proteine und dergleichen Verunreinigungen beispielsweise durch Verwendung verdünnter Natronlauge mit Reinigungsmittel und Entschäumer zu entfernen; daran anschließende Behandlungsstufen zur Spülung sowie Klassieren der Flakes mittels Schwimm-Sink-Verfahren; wenigstens einen Rotations- und/oder Konvektionstrockner zur Trocknung der Flakes; und einen Abscheider zur Klassierung des so gewaschenen und getrockneten Materials.

Der Leistungsbedarf des Wäschers kann dabei für sich genommen 10-30 kW und für zusätzliche Antriebe zur Versorgung der Schneidmühle 8-35 kW betragen und/oder der spezifische Stromverbrauch des Wäschers kann für sich genommen 0,003-0,015 kWh pro kg Ausgangsmaterial und für zusätzliche Antriebe zur Versorgung der Schneidmühle 0,008-0,025 kWh pro kg Ausgangsmaterial betragen. Darunter sind beispielsweise Pumpen- und Siebmaschinenantriebe zu verstehen, nicht der Antrieb der wenigstens einen Schneidmühle selbst.

Die von der gesamten Anlage, also einschließlich der wenigstens einen Schneidmühle und eines nachgeschalteten Waschmoduls, für die Wiederaufbereitung umgewandelte elektrische Leistung kann dann beispielsweise 300 bis 400 kW und/oder die spezifische Energie 0,1 bis 0,15 kWh pro kg Ausgangsmaterial betragen. Die Heizleistung beläuft sich entsprechend beispielsweise auf 315 bis 465 kW und/oder der Wärmebedarf kann 0,11 bis 0,16 kWh pro kg Ausgangsmaterial betragen.

Es versteht sich, dass mit beschriebenen Vorrichtungsmerkmalen, Modulen oder dergleichen entsprechende Verfahrensschritte ausgeführt werden können, und dass die Anlage zur Ausführung beschriebener Verfahrensschritte entsprechend eingerichtet sein kann.

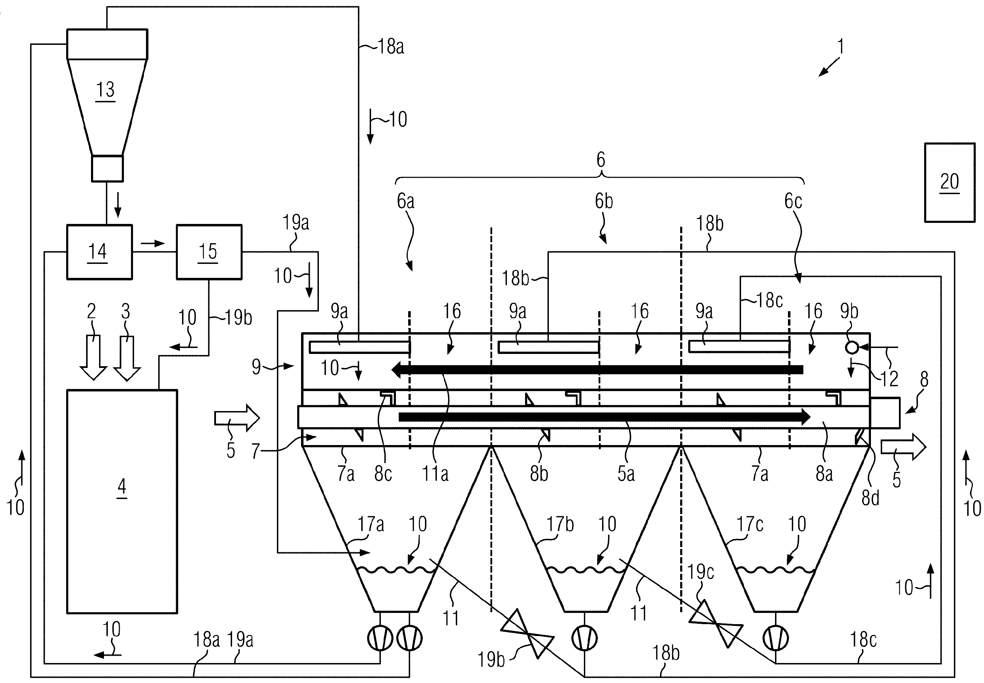

Eine bevorzugte Ausführungsform der Erfindung ist zeichnerisch dargestellt. Die einzige Figur zeigt eine schematische Darstellung der Anlage mit Stoffströmen.

Wie die Figur erkennen lässt, umfasst die Anlage 1 zur Wiederaufbereitung von Ausgangsmaterial in Form gebrauchter Behälter 2 und/oder Verpackungsbestandteile 3 aus Kunststoff wenigstens eine Schneidmühle 4 zur Nasszerkleinerung der Behälter 2 und/oder Verpackungsbestandteile 3 zu Flakes 5 und einen aufbereitungstechnisch daran direkt anschließenden Wäscher 6 zur Nassreinigung der Flakes 5.

Der Wäscher 6 umfasst: einen Trog 7 zur Aufnahme der Flakes 5 während des Waschens; ein Fördermittel 8 zur Durchmischung der Flakes 5 und zu ihrem Transport vom Materialeingang zum Materialausgang des Trogs 7; und über dem Fördermittel 8 angeordnete Abgabevorrichtungen 9 zum Abgeben einer Waschflüssigkeit 10 auf die Flakes 5 während ihrer Durchmischung im Trog 7. Die mittlere Verweildauer der Flakes im Trog 7 beträgt beispielsweise 5 bis 15 Minuten.

Der Wäscher 6 kann wenigstens zwei parallel geschaltete Behandlungsspuren umfassen (nicht dargestellt) mit je einem Trog 7, Fördermittel 8 und zugeordneten Abgabevorrichtungen 9.

Die Waschflüssigkeit 10 besteht im Wesentlichen aus Wasser mit optionaler Beimengung und/oder Verschleppung von Lauge, Reinigungsmittel, Entschäumer und/oder dergleichen Additiven.

Im Beispiel umfasst der Wäscher 6 drei hintereinander geschaltete Waschstufen, und zwar eine bezüglich der Transportrichtung 5a der Flakes 5 (und somit der Richtung des Materialstroms) eingangsseitige erste Waschstufe 6a, eine daran anschließende zweite Waschstufe 6b und eine ausgangsseitige dritte bzw. letzte Waschstufe 6c.

Die dritte Waschstufe 6c kann einen größeren Durchsatz der Waschflüssigkeit 10 und/oder eine längere Verweildauer der Flakes 5 aufweisen als jeweils die erste und zweite Waschstufe 6a, 6b und hierfür beispielsweise in Transportrichtung 5 länger ausgebildet sein (nicht dargestellt). Prinzipiell können einzelne Waschstufen 6a, 6b, 6c diesbezüglich individuell ausgelegt sein und sich entsprechend voneinander unterscheiden.

Die Waschflüssigkeit 10 wird in den einzelnen Waschstufen 6a, 6b, 6c unter dem Trog 7 separat aufgefangen und zirkuliert darin zurück zur jeweiligen Abgabevorrichtung 9. Zusätzlich sind wenigstens zwei der Waschstufen 6a, 6b, 6c zur anteilig entgegen des Materialstroms der Flakes 5 gegenseitigen Versorgung mit Waschflüssigkeit 10 durch je eine Kaskadierungsleitung 11 miteinander verbunden, wobei die Fließrichtung 11a der insgesamt daraus resultierenden Waschflüssigkeits-Kaskade der Transportrichtung 5a der Flakes 5 entgegengesetzt ist.

Die dritte bzw. letzte Waschstufe 6c bildet hier eine erste Kaskadenstufe aus, welcher extern bereitgestelltes Prozesswasser 12 und/oder Frischwasser zugeführt wird. Die Waschflüssigkeit 10 wird somit vom Prozesswasser 12 und/oder Frischwasser laufend aufgefrischt. Entsprechend hat das zugeführte Prozesswasser 12 und/oder Frischwasser eine bessere Qualität als die im Wäscher 6 zirkulierende Waschflüssigkeit 10. Die eingangsseitige erste Waschstufe 6a und die mittlere zweite Waschstufe 6b werden dann anteilig mit Waschflüssigkeit 10 versorgt, die in der jeweils stromabwärts (in Transportrichtung 5a) anschließenden Waschstufe 6b, 6c aufgefangen wird. Entsprechend nimmt die Schmutzfracht der Waschflüssigkeit 10 von der ausgangsseitigen dritten Waschstufe 6c zur eingangsseitigen ersten Waschstufe 6a zu, welche somit die letzte Kaskadenstufe ausbildet.

In der Figur ist zudem schematisch dargestellt, dass in der eingangsseitigen ersten Waschstufe 6a aufgefangene Waschflüssigkeit 10 zur Wasserversorgung der Schneidmühle 4 verwendet werden kann. Hierdurch ist eine besonders effiziente Wasserversorgung für die Schneidmühle 4 und den Wäscher 6 im Sinne eines gemeinsam gebildeten Nassmahlmoduls möglich. Dies ist auch für zwei Schneidmühlen 4 im Parallelbetrieb oder im Standby wenigstens einer Schneidmühle 4 möglich.

Zu diesem Zweck kann in der ersten Waschstufe 6a aufgefangene Waschflüssigkeit 10 zunächst einem Hydrozyklon 13 zugeführt werden. Ein Anteil, und zwar der geklärte Oberlauf, der dort gereinigten Waschflüssigkeit 10 kann wieder zur Abgabe auf die Flakes 5 in die erste Waschstufe 6a zurückgeführt werden. Ein zweiter Anteil, und zwar der angedickte Unterlauf, der dem Hydrozyklon 13 zugeführten Waschflüssigkeit 10 kann über eine Siebmaschine 14 und/oder eine andere Aufbereitung zur Fest-Flüssig-Trennung (zum Zweck des Abtransports der Kontamination aus dem Prozess) einem Vorlagetank 15 zugeführt werden, der als Speicher zur Wasserversorgung der Schneidmühle 4 und/oder der ersten Waschstufe 6a dient. Ergänzend oder alternativ ist ein mechanischer Überlauf für Überschuss-Menge aus dem Vorlagetank 15 möglich.

Es versteht sich, dass für die Förderung der Waschflüssigkeit 10 geeignete Pumpen vorhanden sind, die der Einfachheit in der Darstellung weggelassen sein können.

Wie die Figur weiterhin schematisch zeigt, umfasst das Transportmittel 8 eine motorisch angetriebene Welle 8a, die liegend und vorzugsweise waagrecht ausgerichtet ist und sich über alle Waschzonen 6a, 6b, 6c erstreckt. An der Welle 8a sind mitrotierende Förderwerkzeuge 8b, 8c, 8d angeordnet.

Beispielsweise handelt es sich bei den Förderwerkzeugen 8a um Strukturen ähnlich einer Pflugschar, welche u.a. für die Bewegung der Flakes 5 in Transportrichtung 5a sorgen, also bezüglich der Welle 8a im Wesentlichen axial. Dies resultiert im Mittel in einer schraubenförmigen Transportbahn der Flakes 5 bei deren gleichzeitiger Vereinzelung und Durchmischung.

Die Förderwerkzeuge 8b sind beispielsweise sogenannte Tellerwerkzeuge, welche die Flakes 5 ebenso vereinzeln und durchmischen sowie eine am Trog 7 ausgebildete Siebfläche 7a reinigen, indem sie die Flakes 5 an der Siebfläche 7a entlangführen und somit einen Selbstreinigungseffekt des Trogs 7 während des Arbeitsbetriebs ermöglichen.

Das Förderwerkzeug 8d ist beispielsweise ein am (in Transportrichtung 5a) ausgangsseitigen Ende der Welle 8a angeordneter Mitnehmer, welcher für einen Materialabwurf der Flakes 5 aus dem Wäscher 6 sorgt.

Der Trog 7 ist zumindest in seinem unteren Bereich als Siebkorb ausgebildet, dessen Siebfläche 7a beispielsweise eine Lochweite von 2 mm aufweist. Im Bereich der ersten Waschstufe 6a kann die Lochweite demgegenüber auch vergrößert sein und beispielsweise 3 mm betragen. Derartige Siebflächen 7a eignen sich zum Zurückhalten der Flakes 5, wohingegen die in der jeweiligen Waschzone 6a, 6b, 6c abgegebene Waschflüssigkeit 10 nach Kontakt mit den Flakes 5 aus dem Trog 7 abfließen kann.

In der Figur ist schematisch angedeutet, dass die Abgabevorrichtungen 9 als Überschwallungen 9a mit Schwallblechen ausgebildet sein können, von denen die Waschflüssigkeit 10 in prinzipiell bekannter Weise auf die Flakes 5 herabläuft.

Ferner kann auf jede Überschwallung 9a eine Abtropfzone 16 folgen, in der die Flakes 5 vor Eintritt in die jeweils nachfolgende Waschzone 6b, 6c bzw. vor der abschließenden Spülung abtropfen können, um so die Effizienz des Waschvorgangs zu erhöhen.

Die Abgabevorrichtungen 9 können am Ausgang der letzten Waschstufe 6c wenigstens ein quer zur Transportrichtung 5 verlaufendes Spritzrohr 9b oder dergleichen umfassen, aus dem die Flakes 5 unmittelbar vor dem Auswurf aus dem Wäscher 6 mittels Prozesswasser 12 geeigneter Qualität bzw. mit Frischwasser abgeduscht werden. Das Spritzrohr 9b bildet dann die erste Kaskadenstufe aus. Anders gesagt, wird die beste im Wäscher 6 verfügbare Wasserqualität direkt vor dem Materialausgang des Wäschers 6 zur abschließenden Spülung der Flakes 5 verwendet.

Jede der Waschstufen 6a, 6b, 6c umfasst im Bereich unterhalb des wenigstens einen Trogs 7 einen Auffangbehälter 17a, 17b, 17c zum Auffangen der in der Waschstufe 6a, 6b, 6c jeweils abgegebenen Waschflüssigkeit 10. Die Auffangbehälter 17a, 17b, 17c münden in Umwälzkreise 18a, 18b, 18c, in denen die Waschflüssigkeit 10 innerhalb der jeweiligen Waschstufe 6a, 6b, 6c zirkuliert.

Die Kaskadierungsleitungen 11 können von den Umwälzkreisen 18b und 18c der zweiten und dritten Waschstufe 6b, 6c abzweigen und dann beispielsweise über maschinell steuerbare Stellorgane 19b, 19c prinzipiell bekannter Bauart in den Auffangbehälter 17a, 17b der jeweils bezüglich des Materialstroms vorgeschalteten Waschstufe 6a, 6b münden.

Dem Auffangbehälter 17a der ersten Waschstufe 6a können, wie beispielhaft dargestellt ist, zwei separate Umwälzkreise 18a, 19a (mit 15a) zugeordnet sein, um Waschflüssigkeit 10 über den Hydrozyklon 13 und/oder die Siebmaschine 14 sowohl der Schneidmühle 4 zuzuführen als auch wieder in die erste Waschstufe 6a zurückzuführen.

Beispielsweise kann der Umwälzkreis (die Leitung) 19a lediglich als mechanischer Überlauf in den Auffangbehälter (Tank) 17a zurückführen, da im Umwälzkreis 18a in der Regel eine bessere Wasserqualität zur Beaufschlagung der Flakes 5 vorliegt als nach der Siebmaschine 14. Die Wasserversorgung19b der Schneidmühle 4 kann z.B. von einer Pumpe pro Schneidmühle 4 versorgt werden. Ein Überlauf kann hier auch dazu dienen, ein Leersaugen des Vorlagetanks 15 zu vermeiden.

Prinzipiell sind auch andere / weitere Aufbereitungsprozesse in wenigstens einem der Auffangbehälter 17a, 17b, 17c denkbar, beispielsweise bei relativ starker Kontamination der Flakes 5. Diese ließe sich alternativ oder ergänzend beispielsweise mittels Trommelsieben, Flotation und/oder dergleichen Aufbereitungsstufe zur Fest-Flüssig-Trennung aus dem Waschprozess entfernen.

Der Hydrozyklon 13 dient der Abscheidung sinkender Stoffe, wie beispielsweise Sand mit einer Partikelgröße ab 50 µm. Der Unterlauf des Hydrozyklons 13 fließt (ggf. durch eine Pumpe unterstützt) vorzugsweise auf eine Siebmaschine 14, in der diese Feststoffe von der Waschflüssigkeit 10 getrennt werden. Die Siebmaschine 14 kann auf diese Weise abgetrennte Verunreinigungen aus der Waschflüssigkeit 10 und damit aus dem Waschprozess bzw. aus der Anlage 1 entfernen. Der Oberlauf des Hydrozyklons 13 weist in der Regel eine bessere Wasserqualität auf als die in der ersten Waschstufe 6a zirkulierende Waschflüssigkeit 10 und kann demnach vorteilhaft auf die in der ersten Waschzone 6a vorhandenen Flakes 5 abgegeben werden.

Der Unterlauf des Hydrozyklons 13 kann nach Reinigung in der Siebmaschine 14 als Waschflüssigkeit 10 in den Vorlagetank 15 geleitet werden. Dieser dient optional zur Versorgung der Schneidmühle 4 oder ggf. von wenigstens zwei Schneidmühlen 4 mit Waschflüssigkeit 10 über eine Versorgungsleitung 19b. Überschüssige Waschflüssigkeit 10 kann aus dem Vorlagetank 15 zurück in die erste Waschstufe 6a geleitet werden.

Der Wäscher 6 kann zwei parallel geschaltete Tröge 7 mit jeweiligem Fördermittel 8 aufweisen (nicht dargestellt), die gleichermaßen durch alle vorhandenen Waschzonen 6a, 6b, 6c verlaufen. Die Wellen 8a der Fördermittel 8 könnten dann (paarweise) gegenläufig rotieren. Die Anlage 1 kann wenigstens zwei Schneidmühlen 4 umfassen (nicht dargestellt), denen dann vorzugsweise jeweils einer der parallel geschalteten Tröge 7 zugeordnet ist. Für diese ist dann pro Waschstufe 6a, 6b, 6c aber nur eine gemeinsame Wasserversorgung mit Umwälzung und Kaskadierung der Waschflüssigkeit 10 erforderlich, sodass sich die wenigstens eine Schneidmühle 4 und der Wäscher 6 in ggf. mehrspuriger Ausführung auch hinsichtlich der Wasserversorgung besonders effizient und flexibel in einem Anlagenmodul miteinander kombinieren lassen.

Zudem wird die für die erforderliche Reinigungswirkung insgesamt nötige Anzahl von Prozesseinheiten minimiert und eine besonders schonende Reinigung auch relativ dünner und brüchiger Flakes 5 und somit eine Ressourcen, wie beispielsweise Strom, Betriebsmittel und/oder Wartung, schonende Wiederaufbereitung mit besonders hoher Materialausbeute ermöglicht. An die beschriebene Anlage / das beschriebene Verfahren können sich prinzipiell bekannte Prozesseinheiten bzw. Prozesse zur Zwischenspeicherung, Heiß-/ Intensivwäsche, Trocknung und Klassierung der Flakes anschließen, wobei dann für die Heiß-/ Intensivwäsche keine zusätzliche Vorwäsche mehr erforderlich ist.

Die Anlage 1 umfasst hier im Produktstrom der Flakes 5 dem Wäscher 6 nachgeschaltet ein Waschmodul 20, das in prinzipiell bekannter Weise eine Heißwaschstufe zur Intensivwäsche beispielsweise unter Verwendung verdünnter Natronlauge mit Reinigungsmittel und Entschäumer, eine daran anschließende Behandlungsstufe zur Spülung sowie zum Klassieren der Flakes mittels Schwimm-Sink-Verfahren, einen Rotations- und/oder Konvektionstrockner zur Trocknung der Flakes und beispielsweise einen Zickzack-Abscheider zur Klassierung der gewaschenen und getrockneten Flakes 5 umfassen kann.

Mit dem beschriebenen Verfahren kann eine Materialausbeute der Flakes 5 nach dem Waschen im Trog 7 von 97 bis 99,5 % in Relation zu der der Schneidmühle 4 zugeführten Materialmenge der Behälter 2 und/oder Verpackungsbestandteile 3 erzielt werden. Nach dem Waschmodul 20 kann die entsprechende Ausbeute 70 bis 95 % betragen.

## Patentansprüche

1. Anlage (1) zur Wiederaufbereitung von Behältern (2) und/oder Verpackungsbestandteilen (3) jeweils aus Kunststoff, mit wenigstens einer Schneidmühle (4) zur Nasszerkleinerung der Behälter zu Flakes (5) und mit einem daran hinsichtlich der Aufbereitung anschließenden Wäscher (6) zur Nassreinigung der Flakes, wobei der Wäscher umfasst: wenigstens einen Trog (7) zur Aufnahme der Flakes; wenigstens ein Fördermittel (8) zur Durchmischung der Flakes und zu ihrem Transport durch den Trog, und über dem Fördermittel angeordnete Abgabevorrichtungen (9) zum Abgeben einer Waschflüssigkeit (10) auf die Flakes während ihrer Durchmischung.

2. Anlage nach Anspruch 1, wobei der Wäscher (6) wenigstens zwei hintereinander geschaltete Waschstufen (6a, 6b, 6c) mit Umwälzkreisen (18a, 18b, 18c) für die in der jeweiligen Waschstufe verwendete Waschflüssigkeit (10) umfasst und die Umwälzkreise mittels wenigstens einer Kaskadierungsleitung (11) so verbunden sind, dass sich die Waschstufen, entgegengesetzt zur Transportrichtung (5a) der Flakes (5) kaskadiert, gegenseitig entgegen des Materialstroms der Flakes (5) mit der Waschflüssigkeit versorgen können.

3. Anlage nach Anspruch 2, wobei ein Durchsatz der jeweiligen Waschflüssigkeit (10) durch die Abgabevorrichtungen pro Waschstufe (6a, 6b, 6c) 50 bis 150 m³/h und/oder 10 bis 50 l / kg Flakes (5) beträgt.

4. Anlage nach Anspruch 2 oder 3, wobei die Abgabevorrichtungen (9) ferner zur Abgabe extern bereitgestellten Prozesswassers (12) und/oder Frischwassers in der, in Transportrichtung (5a) der Flakes (5) gesehen, letzten Waschstufe (6c) eingerichtet sind.

5. Anlage nach einem der vorigen Ansprüche, wobei das Fördermittel (8) eine sich durch den Trog (7) in liegender Ausrichtung erstreckende und motorisch angetriebene Welle (8a) umfasst mit daran angeordneten Förderwerkzeugen (8b, 8c, 8d) zum Transport der Flakes (5) entlang der Welle und zur Durchmischung der Flakes wenigstens in Drehrichtung der Welle, wobei insbesondere die Drehzahl der Welle 5 bis 30 Umdrehungen pro Minute beträgt.

6. Anlage nach Anspruch 5, wobei der Wäscher (6) wenigstens zwei hintereinander geschaltete Waschstufen (6a, 6b, 6c) umfasst, durch die sich die Welle (8a) bis in einen Abgabebereich zur Abgabe der nassgereinigten Flakes (5) aus dem Wäscher (6) erstreckt.

7. Anlage nach Anspruch 2, ferner mit einer Versorgungsleitung (19b) zur Versorgung der wenigstens einen Schneidmühle (4) mit im Wäscher (6) aufgefangener Waschflüssigkeit (10), wobei die Versorgungsleitung (19b) von einem Vorlagetank (15) abzweigt, der in einen Umwälzkreis (18a, 15a) der eingangsseitigen Waschstufe (6a) integriert ist und über wenigstens eine Aufbereitungsstufe zur Fest-Flüssig-Trennung, insbesondere einen Hydrozyklon (13) und/oder eine Siebmaschine (14), mit der Waschflüssigkeit (10) gespeist wird.

8. Anlage nach einem der vorigen Ansprüche, wobei der Leistungsbedarf des Wäschers (6) für sich genommen 10-30 kW und für zusätzliche Antriebe zur Versorgung der Schneidmühle (4) 8-35 kW beträgt und/oder der spezifische Stromverbrauch des Wäschers (6) für sich genommen 0,003-0,015 kWh/kg Ausgangsmaterial und für zusätzliche Antriebe zur Versorgung der Schneidmühle (4) 0,008-0,025 kWh/kg Ausgangsmaterial beträgt.

9. Anlage nach einem der vorigen Ansprüche, ferner mit einem dem Wäscher (6) nachgeschalteten Waschmodul (20), das wenigstens zur Heißwäsche und insbesondere ferner zur Spülung und Trocknung der Flakes (5) ausgebildet ist, wobei insbesondere die für die Wiederaufbereitung der Behälter (2) und/oder Verpackungsbestandteile (3) in der wenigstens einen Schneidmühle (4), im Wäscher (6) und im Waschmodul (20) insgesamt umgewandelte elektrische Leistung 300-400 kW und/oder die spezifische Energie 0,1-0,15 kWh pro kg Ausgangsmaterial betragen und/oder die zugehörige Heizleistung 315-465 kW und/oder der Wärmebedarf 0,11-0,16 kWh pro kg Ausgangsmaterial beträgt.

10. Verfahren zur Wiederaufbereitung gebrauchter Behälter (2) und/oder Verpackungsbestandteile (3) jeweils aus Kunststoff, insbesondere in der Anlage (1) nach einem der vorigen Ansprüche, wobei die Behälter (2) / Verpackungsbestandteile (3) in einer Schneidmühle (4) zu Flakes (5) nass zerkleinert und anschließend gewaschen werden, indem sie durch einen Trog (7) transportiert und dabei durchmischt werden, und indem eine Waschflüssigkeit (10), deren Hauptbestandteil Wasser ist, auf die Flakes (5) während ihrer Durchmischung abgegeben wird.

11. Verfahren nach Anspruch 10, wobei die Flakes (5) wenigstens zwei hintereinander geschaltete Waschstufen (6a, 6b, 6c) mit Umwälzkreisen (18a, 18b, 18c) für die in der jeweiligen Waschstufe verwendete Waschflüssigkeit (10) durchlaufen und die Schmutzfracht der Waschflüssigkeit dabei von Waschstufe zu Waschstufe abnimmt.

12. Verfahren nach Anspruch 11, wobei sich wenigstens zwei der Waschstufen (6a, 6b, 6c) zumindest anteilig untereinander entgegen des Materialstroms der Flakes (5) mit der Waschflüssigkeit (10) versorgen und die, in Transportrichtung (5a) der Flakes (5) gesehen, letzte Waschstufe (6c) mit extern insbesondere in einem zugeordneten Haupt- und/oder Nachwäscher erzeugtem Prozesswasser und/oder Frischwasser versorgt wird.

13. Verfahren nach einem der Ansprüche 10 bis 12, wobei die mittlere Verweildauer der Flakes (5) im Trog (7) 5 bis 15 Minuten beträgt.

14. Verfahren nach einem der Ansprüche 10 bis 13, wobei die Materialausbeute der Flakes (5) nach dem Waschen im Trog (7) 97 bis 99,5 % in Relation zu der der Schneidmühle (4) zugeführten Materialmenge der Behälter (2) und/oder Verpackungsbestandteile (3) beträgt.

15. Verfahren nach einem der Ansprüche 10 bis 14, wobei die Behälter (2) Getränkeflaschen mit einer Wanddicke von 200 µm bis 3 mm und die Verpackungsbestandteile (3) Schalen mit einer Wanddicke von 100 bis 500 µm umfassen, insbesondere jeweils solche aus PET PP und/oder PS.
